Europäisches Patentamt

European Patent Office

Office européen des brevets

(19)

(11) Veröffentlichungsnummer: **0 154 764**
A1

(12) # EUROPÄISCHE PATENTANMELDUNG

(21) Anmeldenummer: 84890047.8

(22) Anmeldetag: 13.03.84

(51) Int. Cl.⁴: **G 10 H 1/26**, B 42 D 15/02

(43) Veröffentlichungstag der Anmeldung: 18.09.85
Patentblatt 85/38

(71) Anmelder: **Adler, Ernst, Stiegestrasse 48/50 O.T. Barkhausen, D-4515 Bad Essen 1 (DE)**
Anmelder: **Wischin, Josef, Haslingerstrasse 41/22, A-1160 Wien (AT)**

(72) Erfinder: **Wischin, Josef, Haslingergasse 41/22, A-1160 Wien (AT)**
Erfinder: **Adler, Ernst, O.T. Barkhausen Stiegestrasse 48/50, D-4515 Bad Essen 1 (DE)**
Erfinder: **Kerschbaumer, Klaus, Dipl.-Ing. Dr., Münzwardeingasse 4, A-1060 Wien (AT)**
Erfinder: **Seidel, Sigurd, Dipl.-Ing., Reindorfgasse 32/4/28, A-1150 Wien (AT)**

(84) Benannte Vertragsstaaten: **AT BE CH DE FR GB IT LI LU NL SE**

(74) Vertreter: **Binder, Otto, Dipl.-Ing., Stallburggasse 2, A-1010 Wien (AT)**

(54) **Aufzeichnungsträger für akustische und/oder optische Signale.**

(57) Der Aufzeichnungsträger umfaßt im wesentlichen ein Element (5) zur Speicherung digitaler Informationen, ein Abtastelement (3), einen Impulsgeber (1) und einen Signalgeber (9) sowie einen Digital/Analog-Wandler (7) und eine Stromquelle )13).

Zumindest einige dieser Elemente sind auf einer Basis in Form einer gedruckten Schaltung befestigt und bilden dadurch eine flache Baueinheit (15), die sich an Gebrauchsgegenständen, wie Bild- oder Schriftträgern aller Art, insbesondere Büchern (17, 18), Kalendern, Werbungsmitteln, aber auch Verpackungen, Behältern (28, 29), Umhüllungen, Gepäckstücken, Spielzeugen, Arbeitsgeräten und Signalwiedergabegeräten, wie Fernsehern (50) oder Rekordern, anbringen läßt.

Auslösend für das Wirksamwerden dieser Aufzeichnungsträger und für das Auslösen der Informationswiedergabe ist jeweils der bestimmungsgemäße Gebrauch jenes Gegenstandes, an dem der Aufzeichnungsträger angebracht ist, also z.B. das Blättern in einem Buch (17, 18), das Öffnen oder Schließen von Behältern (28, 29), die Inbetriebnahme von Spielzeugen oder Arbeitsgeräten usw.

- 1 -

Aufzeichnungsträger für akustische und/oder
optische Signale.

Die Erfindung betrifft einen Aufzeichnungsträger für
akustische und/oder optische Signale mit zumindest einem
Element zur Speicherung digitaler Informationen, im
folgenden Speicherelement genannt.

Aufgabe der Erfindung ist es, einen solchen Aufzeichnungsträger derart auszubilden und anzuordnen, daß er bei der
bestimmungsgemäßen Benutzung eines Gebrauchsgegenstandes
zum Vorteil des jeweiligen Benutzers wirksam wird.

Erfindungsgemäß ist die Signalwiedergabe willkürlich
durch eine impulsabgebende Benutzung eines Gebrauchsgegenstandes auslösbar, dem der Aufzeichnungsträger
zugehört.

Die Erfindung ist sowohl hinsichtlich der Gestaltung
des Aufzeichnungsträgers selbst, als auch hinsichtlich
dessen Verwendungszweckes und der Art des Gebrauchsgegenstandes außerordentlich mannigfaltig abwandelbar.

Beim Speicherelement kann es sich um elektronische Festwertspeicher beliebiger Gattung, z.B. ROMs, PROMs, RAMs,
EPROMs, um magnetische Gasblasenspeicher usw. handeln.

Unter einem Gebrauchsgegenstand im Sinne vorliegender
Erfindung sind jedwede im täglichen Leben verwendete und verwendbare Gegenstände zu verstehen, also auch Hilfsmittel, wie Verpackungen, sowie Verbrauchsgüter selbst, wie Nahrungsmittel, Energieträger usw. Dementsprechend ist auch der Begriff der "Benutzung" solcher Gegenstände weitestgehend auszulegen, es kann sich bei einer solchen Benutzung gegebenenfalls auch um einen Verbrauch von Einwegartikeln handeln.

Wesentlich für die praktische Verwirklichung des Erfindungs= gedankens ist eine möglichst kompakte und raumsparende Gestaltung des Aufzeichnungsträgers und der ihm zuge= hörenden Elemente.

Nach einer bevorzugten Ausführungsform des Erfindungs= gedankens ist das Speicherelement mit einem Impulsgeber und einem signalabgebenden Element sowie einem Digital/ Analog-Wandler und gegebenenfalls einer Stromquelle zur Bildung einer flachen Baueinheit gemeinsam mit dem Signal= geber auf einer Basis in Form einer gedruckten Schaltung befestigt. Der Impulsgeber startet in diesem Fall ein Ab= tastelement, das seinerseits mit dem Speicherelement in Verbindung steht und für die richtige zeitliche Aufeinan= derfolge der abzugebenden Signale sorgt. Impulsgeber und Stromquelle können gegebenenfalls ident sein, z.B. durch eine Solarzelle verkörpert sein.

Der akustische oder optische Signalgeber kann grundsätzlich verschiedener Gattung sein, z.B. aus einem tonabgebenden piezoelektrischen Element oder einem entsprechend flach und klein gestalteten Lautsprecher oder Hörer oder aus einem lichtabgebenden Element, z.B. einer Leuchtdiode,

Fluoreszenzanzeige, einem Lichtbogen, Flüssigkristallanzeige, LED-Anzeige, Bildröhre od.dgl. oder einer Kombination verschiedener Signalgeber bestehen.

Die Auslösung der Signalwiedergabe kann im Rahmen der Erfindung gleichfalls beliebig erfolgen, im einfachsten Fall mechanisch, z.B. mittels berührungs-, druck- oder erschütterungsempfindlicher Impulsgeber, jedoch auch mittels eines lichtempfindlichen, schallempfindlichen, temperaturempfindlichen oder zeitabhängig wirksamen Im= pulsgebers oder einer Kombination solcher Impulsgeber.

Zur Stromversorgung kann die Baueinheit eine Solarzelle, Primär- und/oder Sekundärzellen, wärmeempfindliche Halbleiterelemente (Photodioden od.dgl. oder auch eine Kombination solcher Elemente umfassen. Im übrigen kann die Energieversorgung durch Umwandlung von Strahlungs= energie aus dem gesamten elektromagnetischen und/oder -akustischen Spektrum erfolgen.

Sehr vielfältig sind die Anwendungsgebiete des Erfindungs= gegenstandes:

So kann es sich beim Gebrauchsgegenstand um einen Bild- und/oder Schriftträger, z.B. um ein Buch, einen Kalender, um Werbungsmittel, wie Prospekte, Warenzugaben od.dgl., handeln, wobei dann den einzelnen Bildern bzw. Texten eines solchen Bild- und/oder Schriftträgers jeweils bestimmte Texte und/oder Melodien als wiederzugebende Signale zuge= ordnet sind.

Bilden bei einem solchen Buch od.dgl. mehrere zusammenge= hörige und miteinander verbundene blattförmige Bild- oder Schriftträger gemeinsam ein Ganzes, sind die den einzelnen Blättern zugeordneten Signale individuell durch Blättern in einem solchen Buch in der richtigen Reihenfolge und zum jeweils zutreffenden Zeitpunkt aufeinanderfolgend abrufbar und auslösbar.

Zur individuellen Auslösung der jeweils zugeordneten Signale können die einzelnen Blätter eines solchen Buches gesonderte, z.B. durch Markierungen bezeichnete, Impulsgeber tragen; wie schon erwähnt, können solche Impulsgeber aus berührungs= empfindlichen, druck-, licht-, schall- oder temperatur= empfindlichen Zellen bestehen, die durch einfaches Auf= schlagen der Seite signalauslösend wirksam werden.

Bei dem Gebrauchsgegenstand kann es sich im Rahmen der Er= findung aber auch um eine Verpackung, z.B. eine Schachtel, eine Dose od.dgl. Umhüllung für eine Ware handeln. In diesem Fall werden die Signale vorzugsweise durch ein Öffnen oder Schließen der Verpackung, z.B. ein Abheben oder Aufklappen des Deckels einer Schachtel, durch Lösen einer Verschnürung od.dgl., auslösbar sein.

Außerordentlich zahlreiche weitere Möglichkeiten in der Anordnung und Funktion der Aufzeichnungsträger ergeben sich bei als Spielzeug ausgebildeten Gebrauchsgegenständen, wobei der wiederzugebende Text bzw. die abzuspielende Melodie weitgehend auf Art und Gestaltung des Spielzeuges abstimmbar sind, z.B. bei Spielzeugeisenbahnen die Abgabe von Betriebsgeräuschen aller Art bei Inbetriebnahme.

Besteht der Gebrauchsgegenstand aus einem Gepäckbehälter, z.B. einem Koffer, einer Tragtasche od.dgl., erschließt sich eine Fülle von Möglichkeiten, dem Benutzer solcher Gebrauchsgegenstände Informationen, z.B. Warnungen oder Ratschläge, zu übermitteln oder - bei einer widerrecht= lichen Benutzung solcher Gepäckstücke - die Umwelt auf diesen Umstand aufmerksam zu machen.

Diese Möglichkeit ist ferner auch dann gegeben, wenn die Signale als Bedienungsanleitung bzw. -hilfe für ein den Gebrauchsgegenstand verkörpernden Arbeitsgerät, z.B. ein Fahrzeug, einen Motor, ein Heiz- und Beleuchtungsaggregat, eine sanitäre Einrichtung, ein Küchengerät, ein Schreib- und Kopiergerät od.dgl., dienen soll.

Schließlich besteht im Rahmen der Erfindung auch noch die vorteilhafte Möglichkeit, den Aufzeichnungsträger einem gesonderten Signalwiedergabegerät, z.B. einem Fernsehgerät, Rekorder od.dgl., zuzuordnen, das dann seinerseits den Gebrauchsgegenstand verkörpert und durch dessen Benutzung die Signalwiedergabe willkürlich, programm- oder zeit= gesteuert ausgelöst wird.

Verschiedene Anwendungsmöglichkeiten des Erfindungsgegen= standes sind in den Zeichnungen beispielsweise veran= schaulicht. Im einzelnen zeigt

Fig.1 das Blockschema einer erfindungsgemäßen flachen Baueinheit,

Fig.2 ein spezielleres Blockschema nach obigem System,

- 6 -   0154764

Fig.3 zeigt in einer Teilansicht eines Buches die Anordnung von Solarzellen,

Fig.4 zeigt dieselbe Anordnung in einer Draufsicht auf das Buch-Innere mit Signalgebern,

Fig.5 zeigt gleichfalls in einer Draufsicht eine abgewandelte Ausführungsform,

Fig. 6 bis 9 stellen in Teil-Draufsichten eine Aus= führungsform der Seitengestaltung bei Ver= wendung lichtempfindlicher Impulsgeber dar,

Fig. 10 bis 12 zeigen eine Abwandlung dieser Aus= führungsform,

Fig. 13 zeigt eine Ausführungsform mit Berührungs- Sensoren oder Folien-Tasten,

Fig.14 zeigt schaubildlich eine Ausführungsform mit solchen Sensoren,

Fig.15 gleichfalls schaubildlich eine Ausführungs= form mit einer Ringmechanik und Berührungs- bzw. Thermosensoren,

Fig.16 zeigt einen Buchdeckel mit ausziehbarem Solarzellen-Träger in einem Querschnitt,

Fig.17 zeigt schaubildlich eine Ausführungsform mit zusätzlicher, gesonderter Stromquelle

Fig.18 stellt eine abgewandelte Variante dar,

Fig.19 zeigt eine abgewandelte Ausführungsform eines Buchdeckels mit aufgedruckter Schaltung,

Fig.20 zeigt schaubildlich eine Ausführungsform des

- 7 -                          0154764

Erfindungsgegenstandes als Pillendose und

Fig.21 das Blockschema hiefür,

Fig.22 das Blockschema für die Baueinheit zu einem bereits vorhandenen Wiedergabegerät üblicher Bauart und

Fig. 23 und 24 eine praktische Ausführungsform hievon schaubildlich.

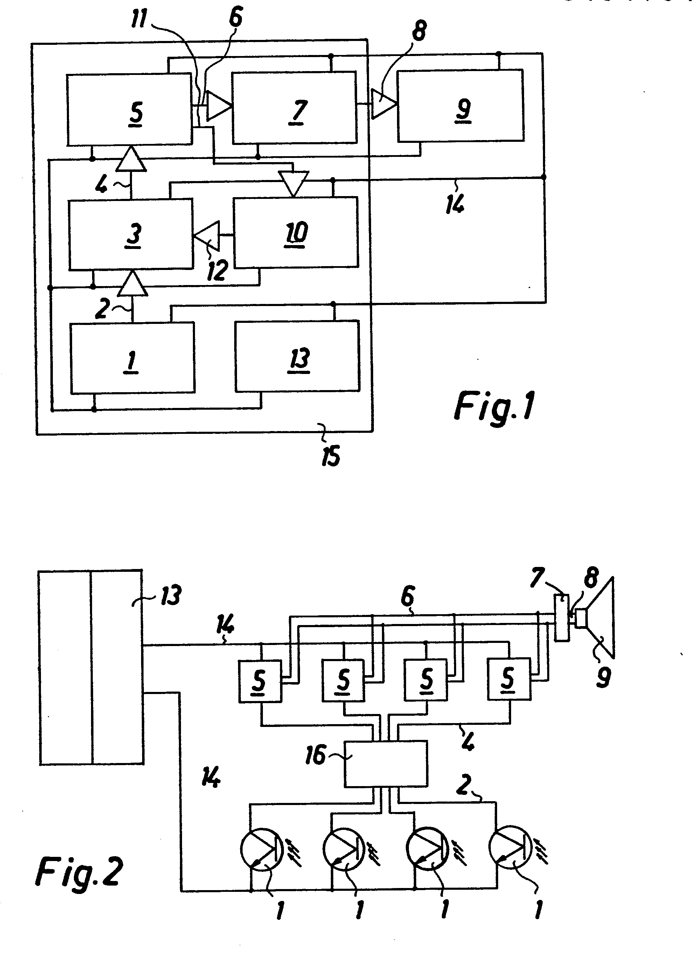

Im Blockschema nach Fig.1 initiiert der Impulsgeber 1 über die Verbindung 2 das Abtastelement 3, das seinerseits über die Verbindung 4 das Speicherelement 5 steuert. Dieses Speicherelement 5 gibt über die Verbindung 6 die digitale Information an einen Digital-Analog-Wandler 7 weiter, der die Analog-Signale über eine Verbindung 8 einem Signal= geber 9 zuführt.

Ein Rücksetz-Element 10 erhält über die Verbindung 11 ein Signal und sorgt über die Verbindung 12 für eine Rück= stellung des Abtastelementes 3.

Zur Stromversorgung kann eine Stromquelle 13 vorgesehen sein, die die vorgenannten Elemente des Blockschemas ent= weder über gesonderte Stromleitungen 14 oder über die Signalverbindungen selbst mit Strom versorgt. Gegebenen= falls kann aber der Impulsgeber 1 selbst eine Stromquelle verkörpern, z.B. als amorphe Solarzelle, ausgebildet sein.

Wie in Fig.1 angedeutet, sind die vorgenannten Elemente 1, 3, 5, 7, 10 und 13 zu einer flachen Baueinheit 15 auf Basis in Form einer gedruckten Schaltung vereinigt; gegebenenfalls kann diese Baueinheit 15 auch den Signal= geber 9 umfassen, doch kann dieser bedarfsweise auch
gesondert angeordnet werden.

Das in Fig.2 dargestellte Blockschema umfaßt vier Speicherelemente 5 in Form von LSIO oder VLSI-Chips, die von einer
amorphen Solarzelle 13 über Verbindungen 14 mit Strom versorgt werden. Diese Speicherelemente 5 sind über ein Element 16 mit den einzelnen Impulsgebern 1 verbunden, die
aus photo-elektrischen Chip-Transistoren bestehen, wobei
dieses Element 16 die richtige Zuordnung der einzelnen
Impulsgeber 1 zu den einzelnen Speicherelementen 5 gewährleistet. Die Speicherelemente 5 sind ihrerseits - gegebenenfalls über den Digital/Analog-Wandler 7 - mit einem Signalgeber 9, z.B. einem Lautsprecher oder Hörer, verbunden.

Wird ein Impulsgeber 1 zu einer Impulsabgabe veranlaßt,
ordnet das Element 16 diesen Impuls dem entsprechenden
Speicherelement 5 zu und veranlaßt dieses, die digital
gespeicherten Signale - gegebenenfalls über den Digital/
Analog-Wandler 7 - an den Signalgeber 9 weiterzuleiten.
Bei ausreichendem Lichteinfall versorgt die Solarzelle 13
die gesamte Einheit mit Strom.

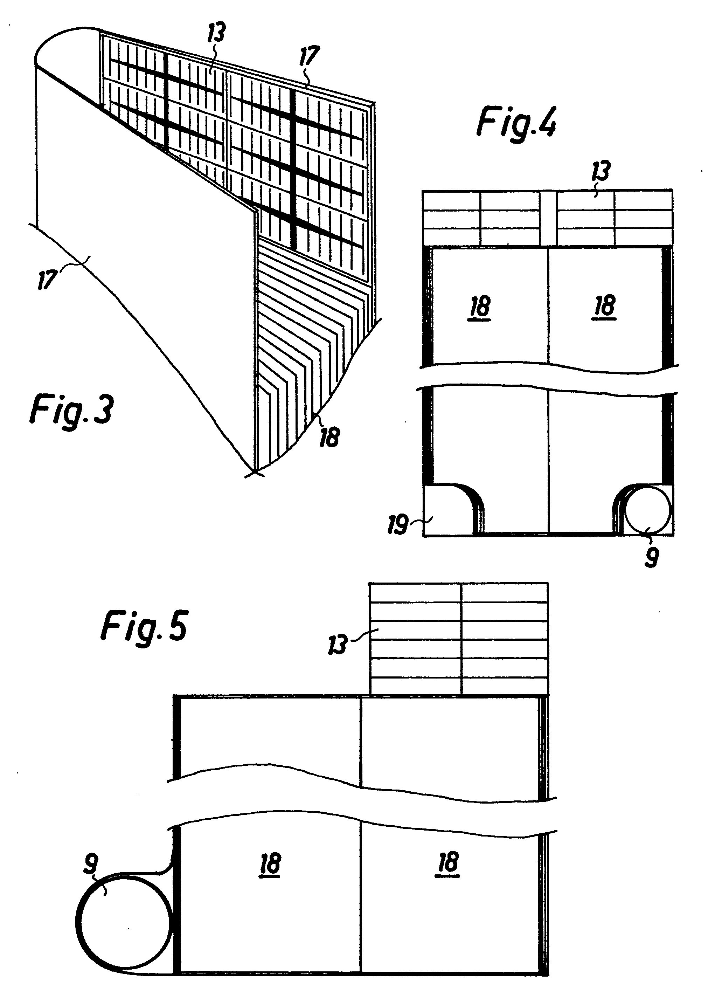

Das in Fig.3 ersichtliche Buch trägt an der Innenseite
zumindest einer seiner Buchdeckel 17 eine Folie amorpher
Solarzellen 13 zur Versorgung der im Buchdeckel 17 unsichtbar untergebrachten flachen Baueinheit 15. Die Seiten 18
des Buches sind im Bereich einer ihrerer unteren Ecken
mit je einer Ausnehmung 19 versehen, die die unbehinderte
Emission der von Signalgebern 9 ausgehenden Signale ermöglicht (Fig.4).

Die Variante nach Fig.5 unterscheidet sich von der vorher beschriebenen Ausführungsform dadurch, daß die Solarzellen 13 nur an einem der Deckel 17 angeordnet sind, um so das einfallende Licht auch im geschlossenen Zustand des Buches besser verwerten zu können. Eventuell kann eine Speicher- oder Pufferbatterie von den Solarzellen ständig aufgeladen werden. Die Anordnung des Signalgebers 9 außerhalb des Seiten-Stapels hat den Vorteil, daß die Signale unbehindert emittiert werden können und die Seiten selbst vollständig erhalten bleiben.

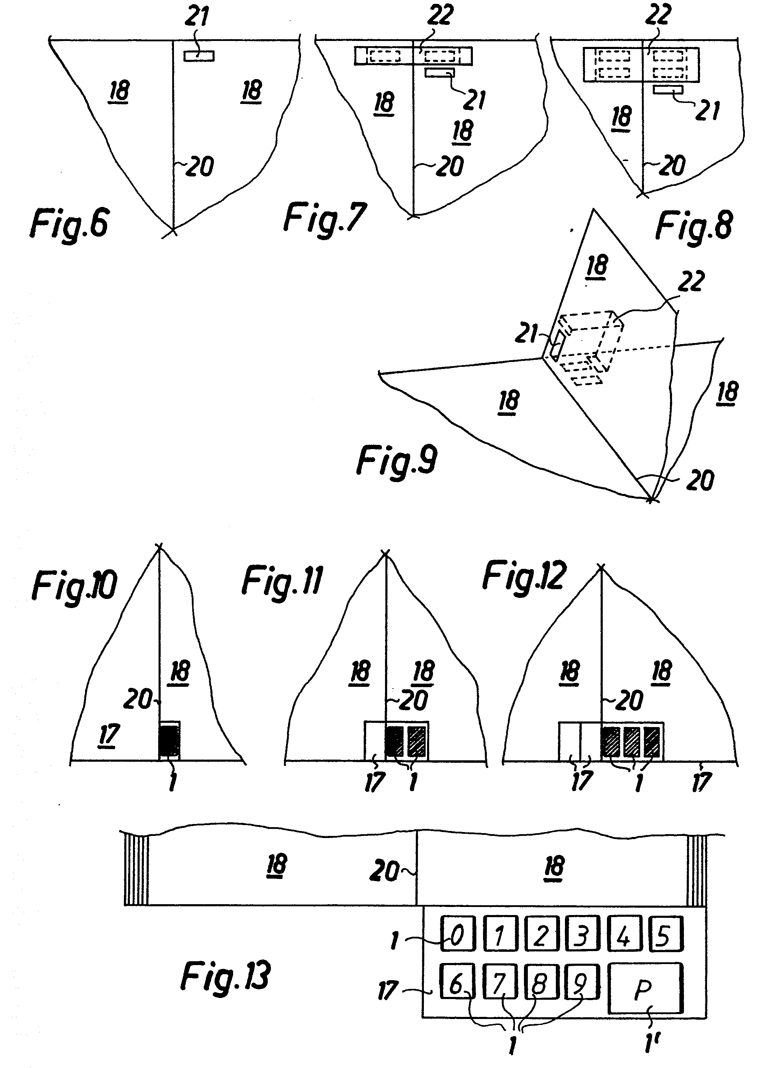

Bei der Ausführungsvariante nach Fig. 6 bis 9 befinden sich entlang der Heftkanten der Blätter 18 Ausnehmungen 21, die jeweils bis zu jener Seite des Buches durchgehen, in der jeweils ein lichtempfindlicher Impulsgeber 1 angebracht ist.

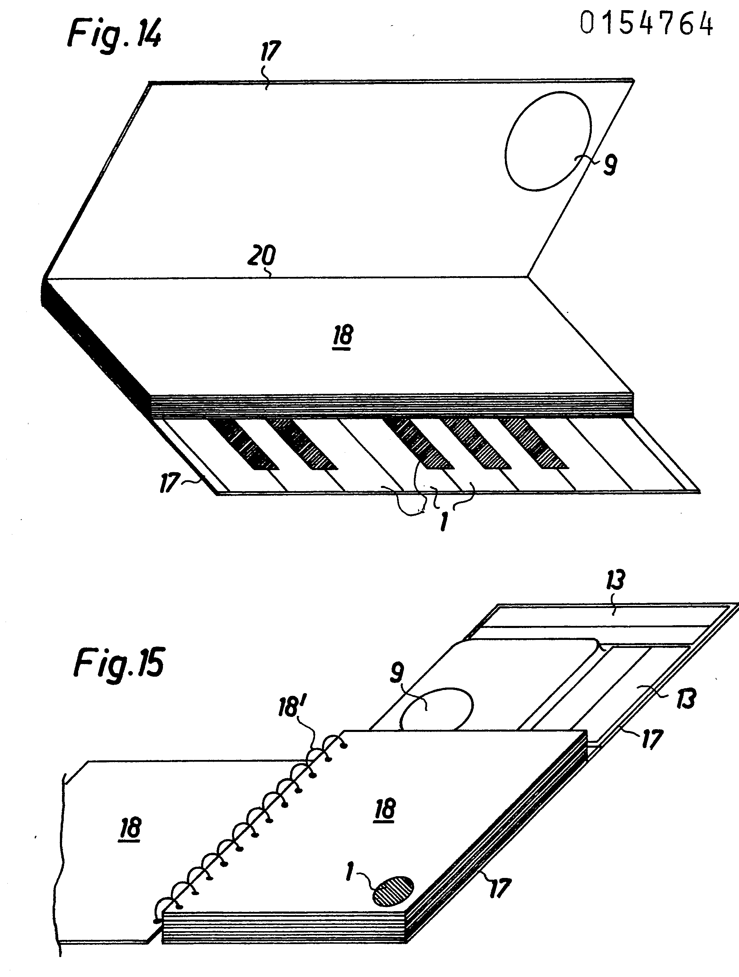

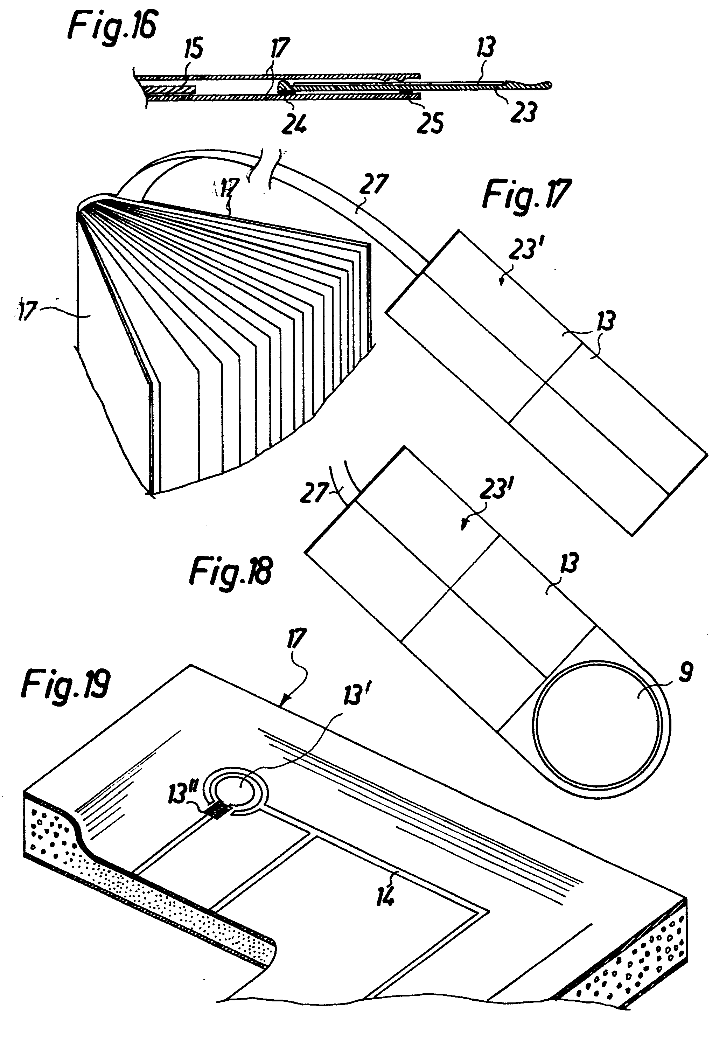

Gemäß Fig.6 ist erst in der zweiten Seite des Buches eine solche Ausnehmung 21 vorgesehen, die durch Aufblättern der ersten Seite 18 freigelegt wird. Nach Umblättern der zwei= ten Seite 18 (Fig.7) deckt dann ein Faltstreifen 22 diese Ausnehmung 21 ab und eine zweite, tieferliegende Ausnehmung 21 wird frei und gestattet den Lichteinfall auf den näch= sten Impulsgeber 1. Dies setzt sich gemäß Fig.8 beim Um= blättern der nächsten Seite 18 fort. Fig.9 zeigt schaubild= lichlich die Funktion des Faltstreifens 22.

Bei der Variante nach Fig. 10 bis 12 ist eine Schar licht= empfindlicher Impulsgeber 1 längs des unteren Randes des hinteren Buchdeckels 17 angeordnet, die beim Umblättern der Seiten 18 nacheinander freigelegt werden, wobei der jeweils zuletzt freigelegte Impulsgeber 1 den dieser jeweils aufgeblätterten Seite zugeordneten Speicher ansteuert.

Gemäß Fig.13 sind Impulsgeber 1 bzw. 1' innenseitig am hinteren Buchdeckel 17 als Folientasten bzw. Berührungs= sensoren angeordnet und werden beim Blättern im Buch willkürlich an Hand der Seitenzahl vom Benutzer des Buches betätigt. Mit 1' ist jener Impulsgeber bezeichnet, der jeweils das Ende der numerischen Eingabe anzeigt.

In Fig.14 ist einer der beiden Buchdeckel 17 mit einer Tastatur von berührungsempfindlichen Impulsgebern 1 versehen, die bei Berührung zumindest eine in einem der Buchdeckel 17 untergebrachte Speichereinheit zur Signal= abgabe an einen Signalgeber 9, z.B. ein piezoelektrisches Element, veranlassen.

Fig. 15 zeigt eine Ausführungsvariante mit einem durch einen aufklappbaren Teil 17' verlängerten Buchdeckel 17. Dieser aufklappbare Teil 17' enthält die Solarzellen 13, die nicht nur als Stromquelle sondern gleichzeitig auch als Impulsgeber wirken. Ferner sind an diesem Teil 17' ein Signalgeber 9 und - unsichtbar - die Speicherelemente 5 sowie die Abtastelemente 3 und der Rücksetzer 10 und gegebenenfalls Analog/Digital-Wandler 7 untergebracht. Die einzelnen Seiten 18 tragen zusätzliche Impulsgeber 1 in Form von Berührungssensoren, die über in den Seiten 18 eingeprägte Leiterbahnen und die Spezial-Ringmechanik 18' mit den im Teil 17' des Buchdeckels 17 untergebrachten Baueinheiten 15 verbunden sind.

- 11 -  0154764

Gemäß Fig.16 ist im doppelten Buchdeckel 17 ein Schieber 23 untergebracht, der die Solarzellen 13 trägt. Zur Strom= versorgung der Elektronik wird der Schieber 23 herausge= zogen und die Solarzellen 13 werden dadurch freigelegt. Die Kontakte 24 und 25 im Buchdeckel 17 bewirken bei herausgezogenen Solarzellen 13 die elektrische Verbindung zwischen den Solarzellen 13 und den Baueinheiten 15.

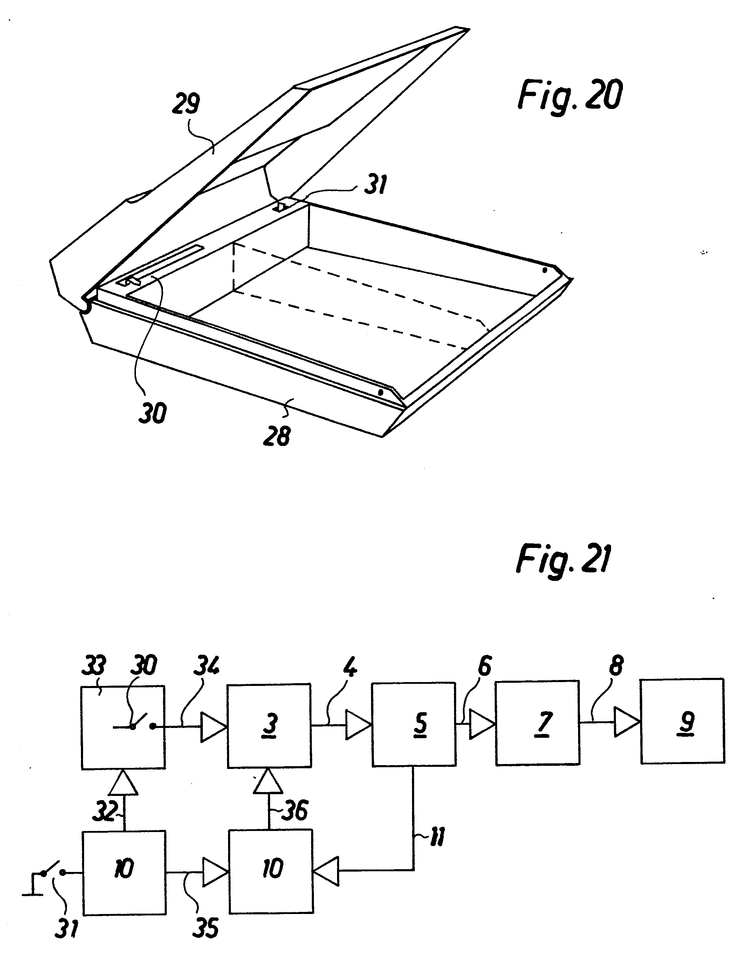

Fig. 17 zeigt einen, z.B. als Lesezeichen ausgebildeten, Träger 23' für die Solarzellen 13, die über Leitungen 27 eine im Buchdeckel 17 befindliche Pufferbatterie aufladen. Fig.18 zeigt eine abgeänderte Ausführungsvariante, bei der in einem solchen Träger 23' neben den Solarzellen 13 noch ein Signalgeber 9 angeordnet ist.

Gemäß Fig.19 trägt ein mehrlagiger, z.B. aus Kartonlagen und einer Schaumstoff-Mittelschicht zusammengesetzter Buch= deckel 17 eine unmittelbar auf einen der Kartons aufge= druckte Schaltung mit Leitern 14, die zu einem Anschluß 13' für eine nicht dargestellte, als Stromquelle nutzbare Batterie führen, die mit einer elektrisch leitenden Klebe= schicht an einem inneren Kontakt befestigt werden kann, wobei an der Anschlußstelle ein Teil der Leiterbahn - an der Stelle 13" - isoliert ist, um einen Kurzschluß zu verhindern. Dieser mehrlagige Deckel 17 gewährleistet eine gewisse Sicherheit gegen Beschädigungen durch Stoß oder Extremtemperaturen.

Die in Fig. 20 dargestellte Pillendose besteht aus einem Unterteil 28 und einem aufklappbaren Deckel 29. Im Unter= teil 28 ist verdeckt eine Baueinheit 15 untergebracht, deren erster Impulsgeber als Zeitschalter 30 und deren zweiter Impulsgeber als Druckschalter 31 ausgebildet ist, der durch das Schließen und Öffnen der Dose, d.h. durch Auf- oder Zuklappen des Deckels 29, betätigbar ist. Der Signalgeber der Baueinheit 15 ist mit dieser Einheit gemeinsam in einem Hohlraum des Unterteiles 28 unterge= bracht.

Wird der Deckel 29 geschlossen, schließt auch der Schalter 31 und initiiert - gemäß Fig.21 - das Rücksetzelement 10, das seinerseits über die Verbindung 32 den Ablauf der Zeitsteuerung 33, die durch das Rücksetzelement 10 auf Null gesetzt wurde, auslöst. Nach Ablauf einer vorbestimm= ten Zeitspanne startet der Zeitschalter 30 über die Ver= bindung 34 und die Ablaufsteuerung 3 bzw. die Verbindung 4 die Wiedergabe des im Speicher 5 abgelegten Textes bzw. einer gespeicherten Melodie, die über die Verbindung 6, den Digital/Analog-Wandler 7 und die Verbindung 8 den Signalgeber 9 zur Abgabe von Signalen veranlaßt.

Das Rücksetzelement 10 beeinflußt über die Verbindung 35 das Rücksetzelement 10', das über die Verbindung 36 die Ablaufsteuerung 3 initialisiert und nach Beendigung der Signalabgabe aus dem Speicherelement 5 die Rücksetzung der Ablaufsteuerung bewirkt.

Auf diese Weise kann der Benutzer der Dose in frei fest= setzbaren, wählbaren Intervallen an die Einnahme eines Medikamentes, z.B. von Pillen, erinnert werden.

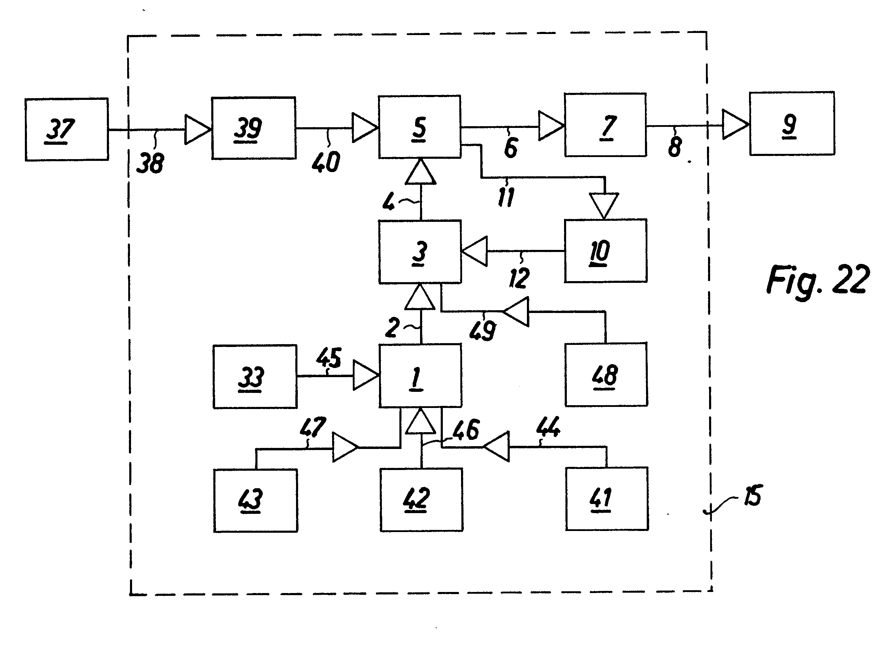

Das Blockschema nach Fig.22 besteht aus einer Baueinheit 15, deren Analog/Digital-Wandler 39 von einer gegebenen= falls außerhalb der Einheit 15 befindlichen Signalquelle 37 über eine Verbindung 38 Signale erhält, diese wandelt und über eine Verbindung 40 an das Speicherelement 5 weitergibt. Das Speicherelement 5 kann wie folgt zu einer Signalabgabe über die Verbindung 6 an den Digital/Analog-Wandler 7 und über die Verbindung 8 an den Signalgeber 9 veranlaßt werden:

Bei dem konkreten Ausführungsbeispiel enthält die Bauein=heit 15 Bedienungselemente 41, 42 und 43, wobei die Signal=wiedergabe durch die willkürliche Betätigung des Start-Stop-Elementes 41 über die Verbindung 44 an den von der Zeitsteuerung 33 über die Verbindung 45 beeinflußten Impuls=geber 1 veranlaßt wird. Das Bedienungselement 42 gestattet über die Verbindung 46 die Festlegung der Baueinheit 15 auf den Wiedergabe-oder Aufnahme-Modus. Das Bedienungselement 43 ermöglicht über die Verbindung 47 den schnellen Vor/ Rücklauf im Speicherelement 5.

Das Bedienungselement 48 dient über die Verbindung 49 dem Setzen des Ablaufsteuerungselementes 3, um die Signalwieder=gabe an einer willkürlich gesetzten Stelle des Speicher=elementes 5 zu starten.

Ein Rücksetzelement 10 wird vom Speicherelement 5 über die Verbindung 11 gesteuert und veranlaßt über die Ver=bindung 12 das Ablaufsteuerungselement 3 zur Rücksetzung.

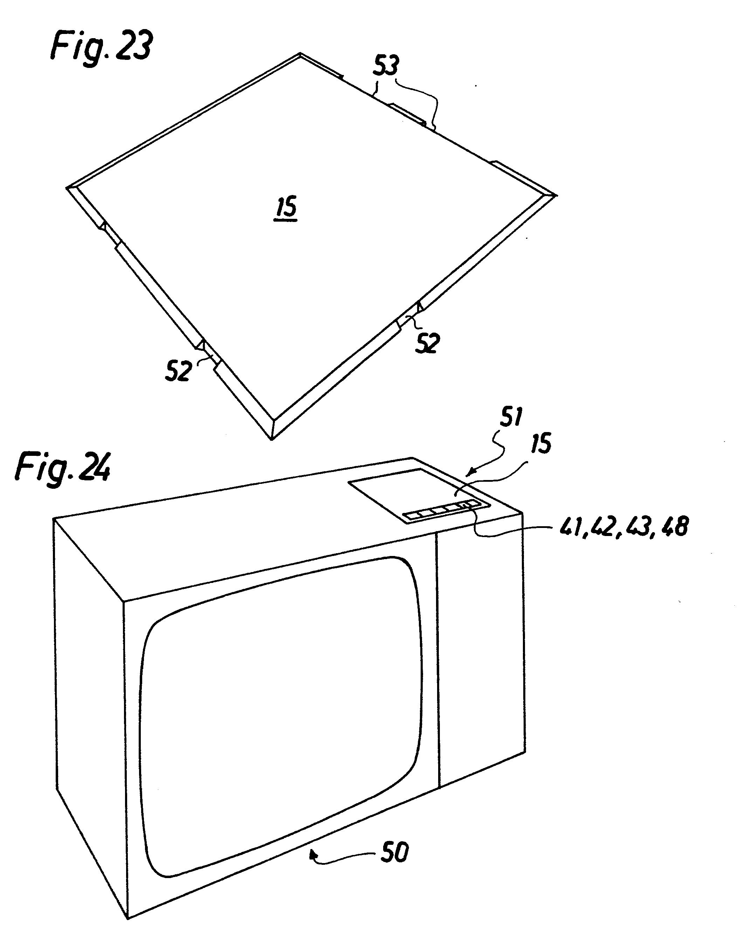

In der Praxis kann diese Blockschaltung - wie etwa in den Fig. 23 und 24 ersichtlich - wie folgt eingesetzt werden:

Ein herkömmliches Fernseh-Gerät 50 besitzt als Zusatzein=richtung einen (nicht sichtbaren) Adapter 51, in den bedarfsweise eine Baueinheit 15 einsetzbar ist.

0154764

Eine hiefür bestimmte Baueinheit 15 gemäß Fig.23 weist periphere Ausnehmungen 52 auf, die der Führung und Fixie= rung im Adapter 51 dienen, und Ausnehmungen 53,die der Verbindung 8 bzw. 38 (Fig.22) zwischen der Baueinheit 15 und dem den Signalgeber 9 und auch die Signalquelle 37 verkörpernden Fernseh-Gerät 50 dienen.

Während die Baueinheit 15 nach Fig.23 keine Bedienungs= elemente aufweist (diese befinden sich gegebenenfalls im Signalgeber 9) trägt die Baueinheit 15 in Fig.24 selbst die Bedienungselemente, so wie dies die Fig.22 veran= schaulicht.

Selbstverständlich sind im Rahmen der Erfindung über die oben beschriebenen und erläuterten Ausführungsbeispiele hinaus noch zahlreiche weitere Möglichkeiten für eine Eingliederung erfindungsgemäßer Baueinheiten in Gebrauchs= gegenstände aller Art denkbar, ohne vom Grundgedanken der Erfindung abzuweichen. Hinsichtlich der Wahl und Gestaltung der erfindungsgemäß auszustattenden Gebrauchs= gegenstände ist die Erfindung außerordentlich weitgehend abwandelbar.

Patentansprüche :

1. Aufzeichnungsträger für akustische und/oder optische Signale mit zumindest einem Element zur Speicherung digitaler Informationen, dadurch gekennzeichnet, daß die Signalwiedergabe willkürlich durch eine impuls= abgebende Benutzung eines Gebrauchsgegenstandes auslösbar ist, dem der Aufzeichnungsträger zugehört.

2. Aufzeichnungsträger nach Anspruch 1, dadurch gekenn= zeichnet, daß das Speicherelement (5) mit einem Impuls= geber (1) und gegebenenfalls mit einem signalabgebenden Element (9) sowie einem Digital/Analog-Wandler (7) und gegebenenfalls einer Stromquelle (13) zur Bildung einer flachen Baueinheit (15) auf einer Basis in Form einer gedruckten Schaltung befestigt ist.

3. Aufzeichnungsträger nach Anspruch 2, dadurch gekenn= zeichnet, daß der Signalgeber (9) aus einem tonab= gebenden piezoelektrischen Element oder Lautsprecher besteht.

4. Aufzeichnungsträger nach Anspruch 2, dadurch gekenn= zeichnet, daß der Signalgeber (9) aus einem licht= abgebenden Element, z.B. einer Leuchtdiode, Fluoreszenz= anzeige, einem Lichtbogen od.dgl., besteht.

5. Aufzeichnungsträger nach Anspruch 2, dadurch gekenn= zeichnet, daß die Baueinheit (15) zur Auslösung der Wiedergabe einen lichtempfindlichen Impulsgeber (1)

0154764

umfaßt.

6. Aufzeichnungsträger nach Anspruch 2, dadurch gekenn= zeichnet, daß die Baueinheit (15) zur Auslösung der Wiedergabe einen schallempfindlichen Impulsgeber (1) umfaßt.

7. Aufzeichnungsträger nach Anspruch 2, dadurch gekenn= zeichnet, daß die Baueinheit (15) zur Auslösung der Wiedergabe einen berührungs- und/oder erschütterungs= empfindlichen Impulsgeber (1) umfaßt.

8. Aufzeichnungsträger nach Anspruch 2, dadurch gekenn= zeichnet, daß die Baueinheit (15) zur Auslösung der Wiedergabe einen temperaturempfindlichen Impulsgeber (1) umfaßt.

9. Aufzeichnungsträger nach Anspruch 2, dadurch gekenn= zeichnet, daß die Baueinheit (15) zur Auslösung der Wiedergabe einen zeitabhängigen Impulsgeber (1 bzw. 30 bzw. 33) umfaßt.

10. Aufzeichnungsträger nach Anspruch 2, dadurch gekenn= zeichnet, daß die Baueinheit (15) zur Stromversorgung eine Solarzelle (13), eine Primär- oder Sekundärzelle oder eine Kombination solcher Elemente umfaßt.

11. Aufzeichnungsträger nach einem der Ansprüche 1 bis 10, dadurch gekennzeichnet, daß der Gebrauchsgegenstand ein Bild- oder Schriftträger, z.B. ein Buch, Kalender, Werbungsmittel od.dgl., ist (Fig. 2 bis 19).

12. Aufzeichnungsträger nach Anspruch 11, gekennzeichnet durch mehrere zusammengehörige blattförmige Bild- oder Schriftträger, wobei die den einzelnen Blättern (18) zugeordneten Signale individuell durch Blättern aufeinanderfolgend auslösbar sind.

13. Aufzeichnungsträger nach Anspruch 12, dadurch gekenn= zeichnet, daß die einzelnen Blätter (18) zur indivi= duellen Auslösung der zugeordneten Signale gesonderte, z.B. mit Markierungen bezeichnete, Impulsgeber (1) tragen.

14. Aufzeichnungsträger nach einem der Ansprüche 11 bis 13, dadurch gekennzeichnet, daß zumindest der Impulsgeber (1), gegebenenfalls samt dem Signalgeber (9) und/oder dem Speicherelement (5), im einzelnen, vorzugsweise hiezu mehrschichtig gestalteten Blatt bzw. einem Buchdeckel (17), untergebracht ist.

15. Aufzeichnungsträger nach einem der Ansprüche 1 bis 10, dadurch gekennzeichnet, daß der Gebrauchsgegenstand eine Verpackung, z.B. eine Dose (28,29) eine Schachtel oder sonstige Umhüllung, ist (Fig.20).

16. Aufzeichnungsträger nach Anspruch 15, dadurch gekenn= zeichnet, daß die Signale durch Öffnen bzw. Schließen der Verpackung, z.B. Abheben bzw. Aufsetzen oder Auf= klappen bzw. Zuklappen eines Deckels (29), Lösen einer Verschnürung od.dgl., auslösbar sind.

17. Aufzeichnungsträger nach einem der Ansprüche 1 bis 10,

0154764

dadurch gekennzeichnet, daß der Gebrauchsgegenstand ein Spielzeug, z.B. eine Spielzeugeisenbahnanlage, ist.

18. Aufzeichnungsträger nach einem der Ansprüche 1 bis 10, dadurch gekennzeichnet, daß der Gebrauchsgegenstand ein Gepäckbehälter, Koffer, eine Tasche od.dgl., ist.

19. Aufzeichnungsträger nach einem der Ansprüche 1 bis 10, dadurch gekennzeichnet, daß die Signale als Bedie= nungsanleitung bzw. -hilfe für ein den Gebrauchs= gegenstand verkörperndes Arbeitsgerät dienen.

20. Aufzeichnungsträger nach einem der Ansprüche 1 bis 10, dadurch gekennzeichnet, daß der Gebrauchsgegenstand ein Signalwiedergabegerät, z.B. ein Fernsehgerät (50), Rekorder od.dgl., ist (Fig.23,24).

Fig.1

Fig.2

0154764

0154764

Fig.4

Fig.3

Fig.5

0154764

Fig.6

Fig.7

Fig.8

Fig.9

Fig.10

Fig.11

Fig.12

Fig.13

Fig.14

0154764

Fig.15

0154764

Fig.16

Fig.17

Fig.18

Fig.19

0154764

Fig. 20

Fig. 21

Fig. 22

0154764

0154764

*Fig. 23*

53

*15*

52

52

*Fig. 24*

51

15

41, 42, 43, 48

50

Europäisches
Patentamt

**EUROPÄISCHER RECHERCHENBERICHT**

0154764
Nummer der Anmeldung

EP 84 89 0047

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. ³) |
|---|---|---|---|
| X | EP-A-0 070 653 (COMMODORE ELECTRONICS) * Zusammenfassung; Figuren 1, 2 * | 1 | G 10 H  1/26 B 42 D  15/02 |
| A | | 3,5,11 ,16 | |
| | --- | | |
| X | EP-A-0 034 024 (S. SWARZTRAUBER) * Zusammenfassung; Figur 2 * | 1 | |
| A | | 3,5 | |
| | --- | | |
| A | DE-A-3 203 393 (G. HUFFERT) * Zusammenfassung * | 1,4,10 | |
| | --- | | |
| A | DE-A-3 123 387 (G. KRAUSE) * Zusammenfassung * | 1,3,7 | RECHERCHIERTE SACHGEBIETE (Int. Cl. ³) |
| | --- | | |
| A | US-A-4 299 041 (S. H. WILSON) * Zusammenfassung * | 1,4,7 | A 63 H  5/00 B 42 D  15/02 G 09 F  27/00 G 10 H  1/26 |
| | --- | | |
| A | US-A-4 222 188 (F. A. TARRANT et al.) * Zusammenfassung; Figuren 1, 2 * | 1,11, 15,16 | |
| | --- | | |
| A | US-A-4 160 339 (S. DANKMAN et al.) * Zusammenfassung; Figur 1 * | 1,17 | |
| | ----- | | |

Der vorliegende Recherchenbericht wurde für alle Patentansprüche erstellt.

| Recherchenort BERLIN | Abschlußdatum der Recherche 08-10-1984 | ZOPF K | Prüfer |
|---|---|---|---|